Europäisches Patentamt

European Patent Office

Office européen des brevets

(19)

(11) Publication number: **0 316 892**
**A2**

(12) # EUROPEAN PATENT APPLICATION

(21) Application number: **88119078.9**

(22) Date of filing: **17.11.88**

(51) Int. Cl.⁴: **H02M 3/335**

(30) Priority: **19.11.87 IT 2270187**

(43) Date of publication of application:
**24.05.89 Bulletin 89/21**

(84) Designated Contracting States:
**DE FR**

(71) Applicant: **FIAR S.p.A.**
**Via G.B. Grassi, 93**
**I-20157 Milano(IT)**

(72) Inventor: **Gambarara, Marcello,**
**Viale Monza 325,**
**I-20128 Milano(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Improved resonant converter with high conversion efficiency and low output impedance.**

(57) An improved resonant converter, designed so as to switch at zero current without using discrete elements and so as to eliminate the effect of asymmetries which may lead to the saturation of the transformer, by appropriately selecting the conduction time of the input switches and the time for which said switches are simultaneously open. The converter has high conversion efficiency and low output impedance.

**EP 0 316 892 A2**

# IMPROVED RESONANT CONVERTER WITH HIGH CONVERSION EFFICIENCY AND LOW OUTPUT IMPEDANCE

The present invention relates to an improved resonant converter with high conversion efficiency and low output impedance.

As is known, converters generally comprise a transformer, the primary winding whereof is alternately connected to voltages of opposite polarity by means of a pair of switches. The secondary winding is connected to a user through a rectifier circuit. Conventional resonant converters furthermore comprise additional discrete elements (inductor and capacitor) which allow both parallel and series resonance.

It is also known that these converters, though in widespread practical use and extensively described in the literature, are not free from disadvantages, such as additional components entailing efficiency-reducing losses, increasing the complexity and cost of the system and reducing its reliability. It is furthermore not always possible to obtain a low output impedance, as is instead desirable for some applications.

Given this situation, the aim of the present invention is to provide an improved resonant converter capable of eliminating the disadvantages of the known art, in particular eliminating the need to provide discrete additional elements, obtaining at the same time an improved behavior concerning the power dissipated on the power switches and therefore the efficiency of the converter itself.

Within the scope of this aim, a particular object is to provide a converter having a low output impedance, in particular in low or nil output load conditions.

A further object of the present invention is to provide a converter which is self-symmetrizing in its operation, eliminating the effects of asymmetries due to the construction of the transformer, differences in the driving times of the switches, differences in the direct voltages of the secondary rectifiers, differences in the saturation voltages of the switches and variations in the temperature and life of the various components of the converter.

Still another object of the present invention is to provide a converter having a negligible loss due to the switching of the rectifier diodes.

Yet another object of the present invention is to provide a converter having an output signal with no high-frequency harmonic content.

This aim, the objects mentioned and others which will become apparent hereinafter are achieved by an improved resonant converter as described in the accompanying claims.

Further characteristics and advantages of the invention will become apparent from the description of a preferred but not exclusive embodiment, illustrated only by way of non-limitative example in the accompanying drawings, wherein:

figure 1a is a conceptual block diagram of the resonant converter according to the invention, showing its essential elements;

figures 1b and 1c are circuit diagrams, equivalent to the diagram of figure 1a, in two different operating states; and

figures 2 and 3 are graphs of some electric signals taken from appropriate points of the circuit of figure 1a, respectively without and with a load.

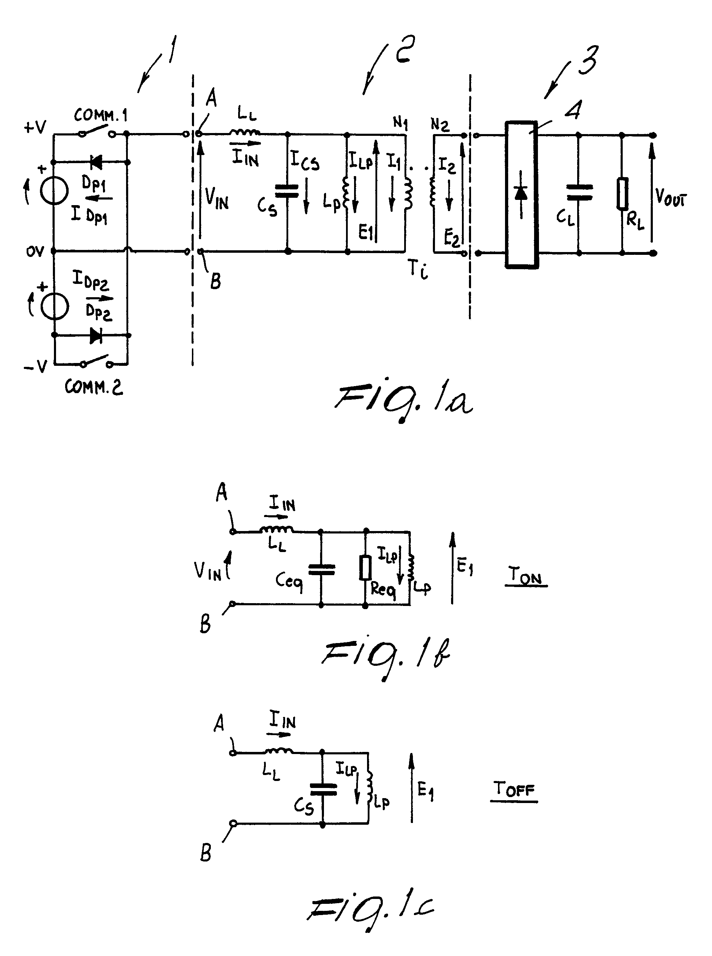

Figure 1a illustrates the conceptual diagram of the converter according to the invention. In particular said converter is studied on a basic push-pull configuration which has the least problems in driving the switches; however the converter illustrated in figure 1a is shown in a half-bridge configuration for the sake of clarity in description.

The converter according to the invention thus essentially comprises a power supply section 1, a power transformer section 2 and a rectifier section 3, mutually cascade coupled. In detail, section 1 comprises a pair of constant voltage generators V which are alternately connected to the terminals A,B of section 2 by means of respective switches COMM1, COMM2, as described in detail hereinafter. A diode, respectively $D_{P1}$, $D_{P2}$, is connected in parallel to each switch and intervenes during the opening interval of the respective switch so as to limit the voltage across the transformer, as will be described hereafter. Section 2 is constituted by a transformer, which in order to clarify its operation is illustrated as being constituted by an ideal transformer Ti and by dispersion and parasitary components of said transformer. In detail, $L_L$ indicates the loss inductor, $C_S$ indicates the dispersion capacitor, $L_P$ indicates the magnetizing inductor, and N1, N2 respectively indicate the primary winding and the secondary winding of the transformer. Section 3 finally comprises a rectifier circuit 4, not shown in detail in the figure, the filtering capacitor $C_L$ and the load $R_L$.

As in known converters, the switches are alternately opened and closed to alternately feed a voltage V and -V to the input terminals A, B of the power transformer section 2. Both switches are also open for a set time interval.

According to the invention the conduction or closure times of said switches are chosen so that they switch at nil current, without having to introduce discrete resonance elements in order to reduce the power dissipated in the power switches, while the interval of simultaneous opening of said switches is chosen so as to make the converter self-switching and self-symmetrizing in order to solve the problems related to the possible presence of asymmetries due to the transformer, to the switches or to the secondary rectifiers.

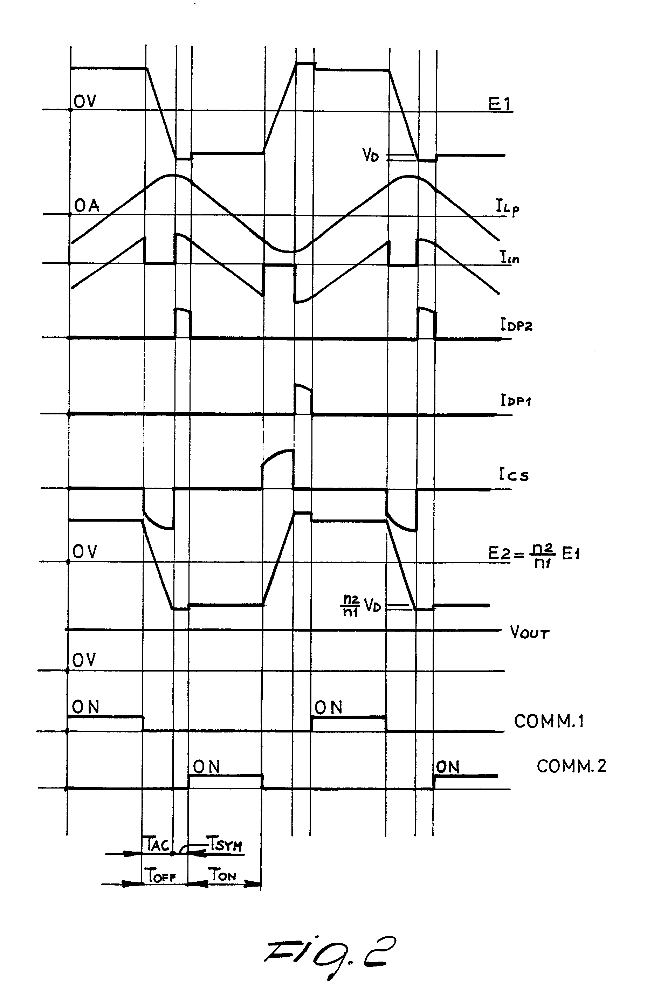

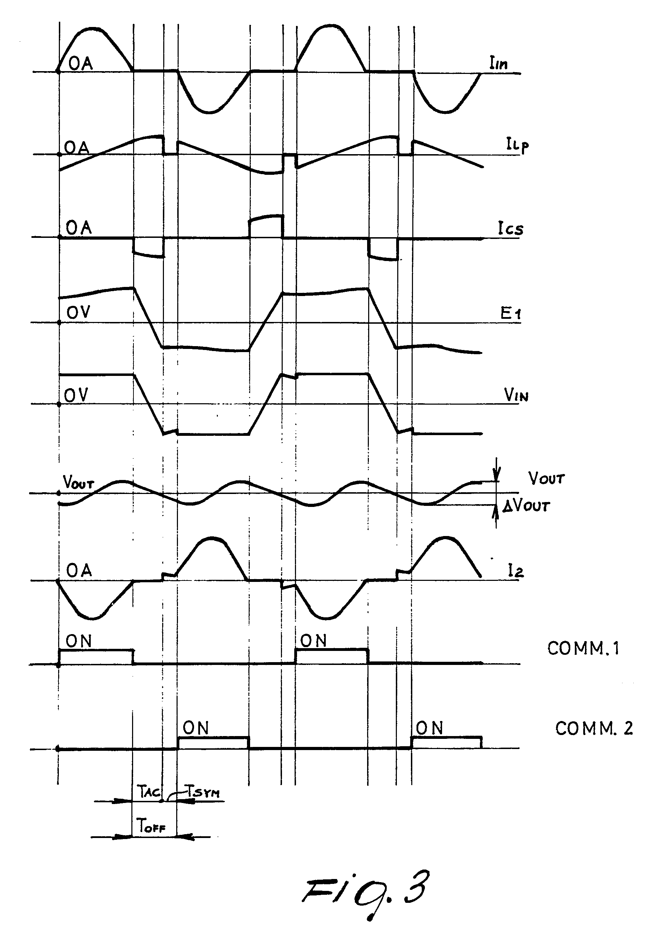

This solution is now disclosed in greater detail by describing the operation of the converter and with reference to the equivalent circuits of figures 1b and 1c and to the diagrams of figures 2 and 3.

As can be seen, the wave shapes define two operating intervals: $T_{ON}$, during which one of the two switches COMM1 or COMM2 is closed, and $T_{OFF}$, during which both switches are open. In particular, during $T_{ON}$ the equivalent circuit of figure 1b is valid, in said circuit, $C_{eq}$ indicating the capacitor resulting from the parallel connection of the filtering capacitor of the load, reflected on the primary winding, and the dispersion capacitor $C_S$ (such a second capacitor being however negligible with respect to the first one) and $R_{eq}$ indicates the resistance on the load reflected on the primary. Figure 1b also illustrates the magnetization inductor $L_p$, the effect whereof being however negligible with respect to $L_L$ during the connection interval of one of the switches. $L_p$ has in fact a very high value with respect to $L_L$ and for the sake of simplicity it can be considered as an open circuit in parallel to the load, during the connection interval of one of the switches. During this phase the constant-value voltage $V_{IN}$ is present across the terminals A and B, enabling the current $I_{IN}$ to flow across $L_L$ and has a linearly rising or decreasing pattern, if there is no load (see figure 2), while, if there is a load, it has a substantially sinusoidal graph (as illustrated in figure 3).

During this step $C_{eq}$ and $L_p$ (and possibly $R_{eq}$) are loaded to the constant voltage E, (for the condition of Fig. 2), while the same voltage is having a light ripple (for the condition of Fig. 3); $I_{Ip}$ is flowing through $L_{Ip}$, the pattern whereof being also shown in fig. 2,3 and corresponding to the condition with and without load.

It should be noted that the scale of $I_{In}$ and of $I_{Ip}$ is very different, since the latter current is much smaller than the former. Thus according to the invention the interval $T_{ON}$ is chosen so that the current in the resonant circuit $I_{IN}$ is nil under load, thus closing the switch e.g. COMM1 at nil current and therefore with nil dissipated power.

At the end of the connection interval of one of the switches, there is an interval $T_{OFF}$ during which both switches are open. During this time the equivalent circuit illustrated in figure 1c is valid; said figure again illustrates the inductors $L_L$ and $L_p$ as well as the capacitor $C_S$. The interval $T_{OFF}$ is given by the sum of two intervals respectively indicated by $T_{AC}$ and $T_{SYM}$. During $T_{AC}$ the magnetizing current is fed into the parasite capacitors $C_S$ of the transformer, actuating it to self-switch (see the graph of $I_{CS}$). This interval is thus equal to the time strictly necessary to allow the transformer to change polarity (see the graph of $E_1$ and $E_2$) and is determined by the value of the magnetization current $I_{Lp}$ and by the parasite capacitors of the transformer ($C_S$). During this time interval $I_{IN}$ is nil, both with and without a load, since the terminals A, B are open.

In the successive time interval $T_{SYM}$, the magnetizing current $I_{Ip}$ is fed into the diodes $D_{P1}$ or $D_{P2}$ connected in parallel to the switches COMM1, COMM2 (as illustrated by the currents $I_{DPI}$ and $1_{DP2}$ in figure 2) when the load is zero, or into the rectifier diodes of the circuit 4 when a load is present. It should be noted that during zero-load operation the presence of the diodes $D_{P1}$, $D_{P2}$ is fundamental, as they prevent the voltage $E_1$ and therefore $E_2$ from continuing to rise or decrease depending on the operating state of the converter.

The interval $T_{SYM}$ is chosen so as to prevent the saturation of the transformers core due to the asymmetries caused by the construction of said transformer, by differences in the driving times of the switches, by differences in the direct voltages of the secondary rectifiers (circuit 4), by differences in the saturation voltages of the switches, and by variations in the temperature and life of the above parameters. In practice $T_{SYM}$ is calculated by taking into account the probable extent of these asymmetries according to components data, adding a safety factor, and can typically be 20% of $T_{AC}$.

Consequently, taking into account that $T_{ON}$ and $T_{AC}$ are determined by the components of the circuit and that $T_{SYM}$ is determined as described above, the duration of the entire period of the converter is in practice fixed according to the invention.

As is apparent from the previous description, the invention fully achieves the intended aims. In fact, as already indicated, the choice of the duration of the conducting interval according to the time required by the load current to drop to zero in the resonant circuit, allows to switch the power switches with nil current and therefore with nil dissipated power, consequently improving the efficiency of the converter, avoiding at the same time problems in the reliability of the resonant discrete components, in particular of the capacitor which is subject to high alternating currents.

The push-pull operation is furthermore self-symmetrizing, eliminating the problems related to the existing asymmetries as explained above.

The rectifier diodes furthermore have a negligible switching loss, since they are fed with a trapezoidal voltage instead of a square one (see E₂), and it is not necessary to introduce additional snubber circuits as required in conventional non-resonant converters to avoid possible overload conditions.

The circuit according to the invention furthermore has a low output impedance, in particular when the output load is low or nil, and the output signal of the converter has ripples with no high-frequency harmonic components. modifications and variations, all of which are within the scope of the inventive concept. In particular the fact is stressed that though the converter is described in the bridge configuration, a push-pull configuration will generally be used, the switches being MOSFET or devices. Accordingly, the diodes $D_{P1}$ and $D_{P2}$ may be intrinsic to the structure or external and faster diodes.

Furthermore all the details may be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Improved resonant converter, comprising a transformer, the primary winding whereof is alternately connected to voltages with opposite polarities by means of a pair of switches, its secondary winding being connectable to a user by means of a rectifier circuit, and a resonant circuit formed by the parasite and dispersion components of said transformer, characterized in that the connection intervals of each of said switches is chosen equal to the time required by the current in the resonant circuit to drop to zero.

2. Converter according to claim 1, characterized in that the time of simultaneous opening of the switches is chosen equal to the sum of the time required by the transformer to self-switch, plus the time required by the operation of the circuit to self-symmetrize.

3. Converter according to the preceding claim, characterized in that said self-symmetrization time is chosen equal to approximately 20% of the self-switching time.

4. Converter according to one or more of the preceding claims, characterized in that each of said switches has a diode connected in parallel so that it conducts during the self-symmetrization time preceding the closure of the associated switch.

Fig. 1a

Fig. 1b

Fig. 1c

Fig. 2

Fig. 3